# EUROPÄISCHE PATENTSCHRIFT

(11) **EP 1 619 120 B1**
(45) Veröffentlichungstag und Bekanntmachung des Hinweises auf die Patenterteilung: **04.04.2007**
(21) Anmeldenummer: 05106381.6
(22) Anmeldetag: 13.07.2005
(51) Int. Cl.: B64D 11/00, B64C 1/12, E04B 2/82, F16B 41/00, B63B 29/02

(54) **Vorrichtung zur Halterung einer Trennwand an einer Wand im Innenraum eines Fahrzeuges**
Device for the attachment of a partition panel to an interior panel in the interior of a vehicle
Dispositif d'attache d'une cloison à une paroie dans l'intérieur d'un véhicule

(30) Priorität: 23.07.2004 EP 04017428
(43) Veröffentlichungstag der Anmeldung: 25.01.2006
(73) Patentinhaber: Goodrich Lighting Systems GmbH, 59557 Lippstadt (DE)
(72) Erfinder: Thomaßin, Stefan, 59555 Lippstadt (DE); Brölemann, Rolf, 33154 Salzkotten (DE)
(74) Vertreter: Hilleringmann, Jochen

(56) Entgegenhaltungen:
- EP-A- 1 288 123
- AU-B- 523 380
- US-A- 5 238 282

## Beschreibung

Die Erfindung betrifft eine Vorrichtung zur Halterung einer Trennwand an einer Wand im Innenraum eines Fahrzeuges und insbesondere zur Halterung einer Trennwand an einer Deckenverkleidung einer Flugzeugkabine.

Es ist bekannt, die Sitzreihen der Kabine eines Flugzeuges den Buchungsklassen entsprechend zu unterteilen. Hierzu werden Abtrennungen in Form von Trennwänden verwendet, die am Kabinenboden befestigt werden und an der Seiten- bzw. Deckenverkleidung gehalten sind. Die Trennwände sind entweder in Form von starren Platten oder als Vorhänge ausgebildet (siehe z.B. AU-B-523 380 B und US-A-5,238,282, sowie AU-B-523380, welche als nächtliegender Stand der Technik betrachtet wird). Ein Beispiel für ein längenveränderbares Deckenverkleidungselement ist in EP-A-1 288 123 beschrieben.

Eine Forderung der Halterung derartiger Trennwände geht dahin, dass die Trennwände mit Spiel an der Wand der Flugzeugkabine gehalten sind. Beispielsweise ist es bekannt, die Trennwände an der Deckenverkleidung der Flugzeugkabine, das heißt oberhalb der Fahrgastsitze und somit unterhalb der Gepäckablagefächer zu halten. In diesem Bereich verläuft im allgemeinen der Versorgungskanal der Fahrzeugkabine, der neben elektrischen Leitungen für die Sitzplatzbeleuchtung und Flugpersonal-Ruftasten auch die der Luftversorgung dienende Verrohrung aufweist. Ferner umfasst der Versorgungskanal auch die Sauerstoffmaskeneinheiten. Zur Kabine hin ist der Versorgungskanal durch eine Deckenverkleidung abgedeckt. Dort, wo Trennwände angeordnet werden können, weist die Deckenverkleidung spezielle Deckenverkleidungselemente auf, die mit Aussparungen zur Aufnahme von aufzunehmenden Elementen (beispielsweise Haltebolzen) der Trennwände ausgebildet sind. Diese Öffnungen sind größer dimensioniert als der Querschnitt der jeweils aufzunehmenden Elemente, so dass eine Relativbewegung der Trennwand und der Deckenverkleidung, wie dies beispielsweise bei Erschütterungen in der Flugzeugkabine der Fall ist, möglich ist. Die Aussparungen sind dann, wenn sie nicht der Halterung einer Trennwand dienen, optisch wenig ansprechend. Zum Verschließen dieser Aussparungen in dem zuvor geschilderten Zustand ist es bekannt, Dichtungslippen vorzusehen.

Die bei nicht aufgenommenem (Verankerungs-)Element freiliegenden Aussparungen in der Deckenverkleidung verleiten zum Einführen von Fremdkörpern, was zu Beschädigungen der dahinter angeordneten Versorgungsleitungen fuhren kann. Fremdkörper können aber auch bei montierter Trennwand seitlich der Haltebolzen in die Aussparungen eingeführt werden.

Eine Aufgabe der Erfindung ist es, eine Vorrichtung zur Halterung einer Trennwand an einer Wand im Innenraum eines Fahrzeuges, insbesondere an einer Deckenverkleidung einer Fahrzeugkabine, zu schaffen, wobei die Vorrichtung über gegen Manipulation gesicherte Aussparungen verfügt.

Zur Lösung dieser Aufgabe wird mit der Erfindung eine Vorrichtung zur Halterung einer Trennwand an einer Wand im Innenraum eines Fahrzeuges, insbesondere an einer Deckenverkleidung einer Fahrzeugkabine, vorgeschlagen, wobei die Vorrichtung versehen ist mit
- einer am Fahrzeug anbringbaren Halteeinheit, die mindestens eine Aussparung aufweist,
- einem an der Halteeinheit angeordneten Schieber, in dem eine Aufnahmeöffnung zur Aufnahme eines aufzunehmenden Verankerungselements der Trennwand ausgebildet ist,
- wobei der Schieber auf einer Bewegungsbahn zwischen einer Abdeckposition, in der der Schieber die Aussparung der Halteeinheit verschließt, und einer Öffnungsposition, in der die Aufnahmeöffnung innerhalb der Aussparung der Halteeinheit angeordnet ist, beweglich an der Halteeinheit gelagert ist.

Nach der Erfindung ist vorgesehen, die mindestens eine Aussparung der an dem Fahrzeug anbringbaren Halteeinheit (beispielsweise Seiten- oder Deckenverkleidungselement mit oder ohne zusätzlichem Halteteil zur Aufnahme des Verankerungselements der Trennwand) mittels eines Schiebers verschließen zu können. Der Schieber ist bewegbar, d. h. linear oder bogenförmig bewegbar oder schwenkbar, an der Halteeinheit angeordnet und weist eine Aufnahmeöffnung zur Aufnahme des aufzunehmenden Elements (beispielsweise Verankerungselement) der Trennwand auf. Diese Aufnahmeöffnung befindet sich innerhalb der Aussparung der Halteeinheit, wenn sich der Schieber in seiner Öffnungsposition befindet. Wenn sich der Schieber in seiner Schließ- oder Abdeckposition befindet, verschließt er die Aussparung. Mit anderen Worten befindet sich also die Aufnahmeöffnung des Schiebers in der Abdeckposition desselben außerhalb der Aussparung der Halteeinheit.

Die Aufnahmeöffnung des Schiebers sollte so dimensioniert sein, dass das aufzunehmende Verankerungselement der Trennwand mit lediglich geringem Spiel aufgenommen ist. Die Dimensionierung der Aussparung in der Halteeinheit ist zweckmäßigerweise derart gewählt, dass Bewegungen des Verankerungselements innerhalb der Aussparung im von der Aufnahmeöffnung aufgenommenen Zustand in den Bewegungsrichtungen des Schiebers in dem Ausmaß möglich sind, wie sie im Hinblick auf die zulässigen Relativbewegungen von Trennwand und Halteeinheit zu erwarten sind.

Beispielsweise ist die mindestens eine Aussparung der Halteeinheit als Langloch ausgebildet, während die Aufnahmeöffnung des Schiebers als Rundloch gestaltet ist, dessen Durchmesser kleiner als oder gleich dem kleineren Durchmesser des Langlochs ist. Das Langloch erstreckt sich dabei in Schiebebewegungsrichtung bzw. längs des Verlaufs der Bewegungsbahn des Schiebers.

Durch die Anordnung des Schiebers lässt sich die Aussparung der Halteeinheit verschließen, wenn keine Trennwand zu halten ist. Der Schieber weist vorzugsweise die gleiche Farbe und auf seiner dem Innenraum zugewandten Seite die gleiche Oberflächenstruktur wie die dem Innenraum zugewandte Seite der Halteeinheit auf. Damit fallen die Aussparungen im geschlossenen Zustand optisch weniger stark auf. Bei von der Aufnahmeöffnung des Schiebers aufgenommenem Element der Trennwand ist die Aussparung im übrigen ebenfalls verschlossen. Damit kann die Aussparung weder bei nicht vorhandener noch bei montierter Trennwand manipuliert werden.

Die zuvor beschriebene Halteeinheit der erfindungsgemäßen Vorrichtung kann zusätzlich noch ein Fixierelement aufweisen, an dem das Verankerungselement der Trennwand (ebenfalls) gehalten ist. Das Fixierelement befindet sich dabei von der Trennwand aus betrachtet hinter dem oben erwähnten Verkleidungselement und ist mit dem Verankerungselement der Trennwand verbunden (beispielsweise durch Zusammenstecken, Zusammenschieben o.dgl.). Eine derartige Halterung bietet sich insbesondere dann an, wenn das Verbindungselement als reines (Decken- oder Seiten-) Verkleidungselement ausgebildet ist, das im allgemeinen nicht so stabil ausgeführt ist, als dass es die auf die Trennwand wirkenden Kräfte aufnehmen könnte. Grundsätzlich ist dies aber auch denkbar, jedoch nicht wünschenswert, da dadurch der Herstellungsaufwand und das Gewicht des Verkleidungselement steigen würde. Die von der Trennwand ausgehenden Kräfte sollten vielmehr (ausschließlich) von dem Fixierelement aufgenommen werden.

Wird als mit dem Schieber ausgebildete Halteeinheit beispielsweise ein Deckenverkleidungselement für den Versorgungskanal einer Flugzeugkabine eingesetzt, so befindet sich das Fixierelement innerhalb des Versorgungskanals und ist dort beispielsweise an der Unterseite der Gepäckablagefächer befestigt. Das Verankerungselement der Trennwand erstreckt sich dann durch die Aussparung und Aufnahmeöffnung des Verkleidungselements hindurch bis zum Fixierelement, wo es gelagert ist.

In vorteilhafter Weiterbildung der Erfindung ist vorgesehen, dass der Schieber ein Betätigungselement zum Bewegen aus der Abdeckposition in Richtung auf die Öffnungsposition aufweist. Dieses Betätigungselement ist von der dem Innenraum des Fahrzeuges zugewandten (Außen-)Seite der Halteeinheit zugänglich, und zwar befindet es sich in der Abdeckposition des Schiebers innerhalb der Aussparung der Halteeinheit. Bei dem Betätigungselement kann es sich um einen Vorsprung oder eine Vertiefung handeln, über die ein Ergreifen des Schiebers mit den Fingern oder einem Werkzeug zwecks Verschieben des Schiebers möglich ist. Vorteilhaft ist es, wenn das Betätigungselement ein Loch oder eine Vertiefung ist, in das bzw. in die sich ein spitzer Gegenstand wie beispielsweise ein Schraubendreher einführen lässt.

Der Schieber ist vorteilhafterweise an der dem Innenraum des Fahrzeuges abgewandten Rückseite der Halteeinheit an diesem linear, kreisbogenförmig oder verschwenkbar geführt. Wird eine Halteeinheit mit Wandverkleidungselement verwendet, so ist es im Hinblick auf die Gewichtsreduktion zweckmäßig, wenn die Dicke des Wandverkleidungselements relativ gering ist. Bei derartigen Konstruktionen wird durch Versteifungsrippen für die ausreichende Formstabilität des Verkleidungselements gesorgt. Diese Versteifungsrippen befinden sich ebenfalls an der Rückseite des Verkleidungselements, also an derjenigen Seite, die im am Fahrzeug angebrachten Zustand des Verkleidungselements dem Innenraum abgewandt ist. Vorteilhaft für die Führung des Schiebers an der Halteeinheit ist es nun, wenn der Schieber an einer oder mehreren insbesondere parallelen Versteifungsrippen des Verkleidungselements bzw. der Halteeinheit bewegbar geführt ist. Spezielle Führungsprofile für den Schieber, die zu einer aufwändigeren Konstruktion und damit auch Fertigung der Halteeinheit führen, sind somit nicht erforderlich.

Damit sich der Schieber bei den im Betrieb des Fahrzeuges zu erwartenden Erschütterungen nicht unbeabsichtigt bewegt, sollte er durch beispielsweise Reibung oder auch durch eine Verrastung an der Halteeinheit anliegend gehalten sein. Zweckmäßig ist hier die Verwendung eines elastischen Andrückelements, das den Schieber gegen die Halteeinheit drückt und für die erforderliche Klemmung bzw. Reibung sorgt. Dieses Andrückelement kann beispielsweise an einer der Versteifungsrippen durch insbesondere eine Klammer o.dgl. befestigt sein. Das Andrückelement ist zweckmäßigerweise als elastischer Stab ausgebildet, der an seinen beiden Enden oder an mindestens einem seiner Enden eine mindestens einseitige Verbreiterung aufweist. Alternativ ist eine bogenförmige Ausgestaltung des elastischen Stabes möglich. Im gegen den Schieber gedrückten Zustand ist der elastische Stab verformt, so dass über seine Enden die erforderliche Kfemmkraft auf den Schieber aufgebracht wird. In der Abdeckposition des Schiebers kann sich dieser außerhalb mindestens einer der endseitigen Verbreiterungen des elastischen Stabes befinden, so dass die betreffende endseitige Verbreiterung an dem stirnseitigen Ende des Schiebers anliegt und somit einen Widerstand gegen eine Bewegung des Schiebers in die Öffnungsposition bewirkt.

Wie bereits oben dargelegt, kann das Verkleidungselement der Halteeinheit an seiner Rückseite Versteifungsrippen aufweisen. Derartige Versteifungsrippen können aus Stabilitätsgründen auch quer zur Bewegungsbahn des Schiebers verlaufen. In diesem Fall erstreckt sich also ein in die Bewegungsbahn des Schiebers hineinragender Vorsprung am Verkleidungselement. Damit wird das Ausmaß der Bewegung des Schiebers beeinträchtigt. In diesem Fall von Vorteil ist es, wenn nahe dem Vorsprung eine Führungsfläche zum Leiten des Schiebers über den Vorsprung ausgebildet ist. Diese "Rampe" sorgt für eine Verformung des Schiebers in dessen sich über die Führungsfläche hinwegbewegenden Teils, was eine zusätzliche Haltekraft in der Abdeckposition des Schiebers ermöglicht.

Die Erfindung wurde vorstehend anhand des Falls beschrieben, dass die Halteeinheit lediglich eine Aussparung aufweist, durch die hindurch sich ein Verankerungselement der Trennwand erstrecken kann, wenn sich der Schieber in seiner Öffnungsposition befindet. Normalerweise weisen die Trennwände mehrere, also mindestens zwei von der Halteeinheit aufzunehmende (Verankerungs-)Elemente auf. Damit weist auch die Halteeinheit mehrere Aussparungen auf. Das wiederum bedeutet, dass auch mehrere Schieberaussparungen vorzusehen sind. Diese Schieberaussparungen können sämtlich oder gruppenweise in einem Schieber ausgebildet sein; es ist aber auch möglich, dass jeder Aussparung einer Schieber mit einer Aufnahmeöffnung zugeordnet ist. Eine dritte Alternative ist darin zu sehen, dass der erfindungsgemäß vorgesehene mindestens eine Schieber zweiteilig ausgebildet ist und zwei benachbarte, bewegbar an der Halteeinheit geführte Schieberabschnitte aufweist. Diese beiden Schieberabschnitte sind an ihren aufeinander zu und voneinander weg bewegbaren Enden jeweils mit einer Randaussparung versehen, die bei aneinander liegenden Schieberabschnitten die Aufnahmeöffnung des Schiebers bilden. In der Abdeckposition des Schiebers verschließen diese Schiebeabschnitte bzw. einer von ihnen die Aussparung der Halteeinheit, während sich die von den beiden Schieberabschnitten gebildete Öffnung in der Öffnungsposition des Schiebers innerhalb der Aussparung der Halteeinheit befindet.

Eine weitere Variante der Erfindung ist darin zu sehen, dass die zuvor beschriebene zweiteilige Schieberausbildung genutzt wird, um eine Aufnahmeöffnung zu schaffen, durch die sich hindurch ein Teil, das im Querschnitt größer ist als die Aufnahmeöffnung bei aneinander liegenden Schiebern, einführen lässt. Hierdurch ist es möglich, im Bedarfsfalle die gesamte Aussparung der Halteeinheit freizugeben, indem nämlich die benachbarten Schieber, die an ihren aufeinander zu und voneinander weg bewegbaren Enden jeweils eine Randaussparung aufweisen, auseinander bewegt werden. Nun kann das oben angesprochene Teil der Trennwand durch die Aussparung der Halteeinheit hindurchgeführt werden. Anschließend kann die Aussparung zu beiden Seiten des durch sie hindurchragenden Teils der Trennwand wieder verschlossen werden. Eine derartige Konstellation ist beispielsweise bei Trennwänden gegeben, die einen Monitor, Kabel und Stecker aufweisen. Um den Stecker durch die Halteeinheit hindurchführen zu können, steht bei dieser Variante der Erfindung die gesamte Aussparung der Halteeinheit zur Verfügung. Wenn das Kabel durch die Aussparung der Halteeinheit hindurchgeführt ist, kann die Aussparung durch Aufeinanderzubewegen der Schieber wieder verschlossen werden, so dass die von diesen Schiebern gebildete Aufnahmeöffnung das Kabel oder ein dieses umgebendes (Kabelführungs-)Rohr der Trennwand umschließt.

Die Erfindung wird nachfolgend unter Bezugnahme auf die Zeichnung näher erläutert. Im einzelnen zeigen:
- Fig. 1: eine Teilquerschnittsansicht durch die Fahrgastkabine eines Flugzeuges mit einer an der Versorgungskanalverkleidung gehaltenen Trennwand,
- Fig. 2: eine Ansicht auf die im eingebauten Zustand der Kabine zugewandten Vorderseite eines der Halterung der Trennwand dienenden Deckenverkleidungselements bei freiliegenden Aufnahmeöffnungen des Schiebers,
- Fig. 3: eine Ansicht auf die im eingebauten Zustand der Kabine zugewandten Vorderseite eines der Halterung der Trennwand dienenden Deckenverkleidungselements bei geschlossenen Aussparungen des Deckenverkleidungselements,
- Fig. 4: eine Draufsicht auf die im eingebauten Zustand des Deckenverkleidungselements der Kabine abgewandten Rückseite des Deckenverkleidungselements mit in der Öffnungsposition befindlichem Schieber,
- Fig. 5: einen Schnitt entlang der Linie V-V der Fig. 4 zur Erläuterung der Anordnung des Schiebers am Deckenverkleidungselement,
- Fig. 6: eine Ansicht auf die Vorderseite eines Deckenverkleidungselements gemäß einem zweiten Ausführungsbeispiel der Erfindung,
- Fig. 7: eine Ansicht auf die Rückseite des Deckenverkleidungselements der Fig. 6,
- Fig. 8: einen Längsschnitt entlang der Linie VIII-VIII der Fig. 7 bei in der Öffnungsposition befindlichem Schieber,
- Fig. 9: eine Schnittansicht entlang der Linie VIII-VIII der Fig. 7 bei in der Abdeckposition befindlichem Schieber,
- Fig. 10: eine Teilschnittansicht einer Flugzeugkabine mit einem gemäß einem dritten Ausführungsbeispiel ausgebildeten Deckenverkleidungselement zur Halterung einer Trennwand mit Monitor oder einem anderen elektrischen Gerät,
- Fig. 11: eine Ansicht auf die Vorderseite des Deckenverkleidungselements gemäß Fig. 10 mit einer Schieberpositionierung, wie sie in der Einbausituation gemäß Fig. 10 gegeben ist,
- Fig. 12: eine Draufsicht auf das Deckenverkleidungselement gemäß Fig. 11, jedoch bei durch den Schieber verschlossenen Aussparungen und
- Fig. 13: eine Ansicht auf die Vorderseite des Deckenverkleidungselements gemäß Fig. 11 bei vollständig freigelegter mittlerer Aussparung, um durch diese einen Stecker o.dgl. gegenüber den Aufnahmeöffnungen des Schiebers verbreitertes Teil hindurchführen zu können.

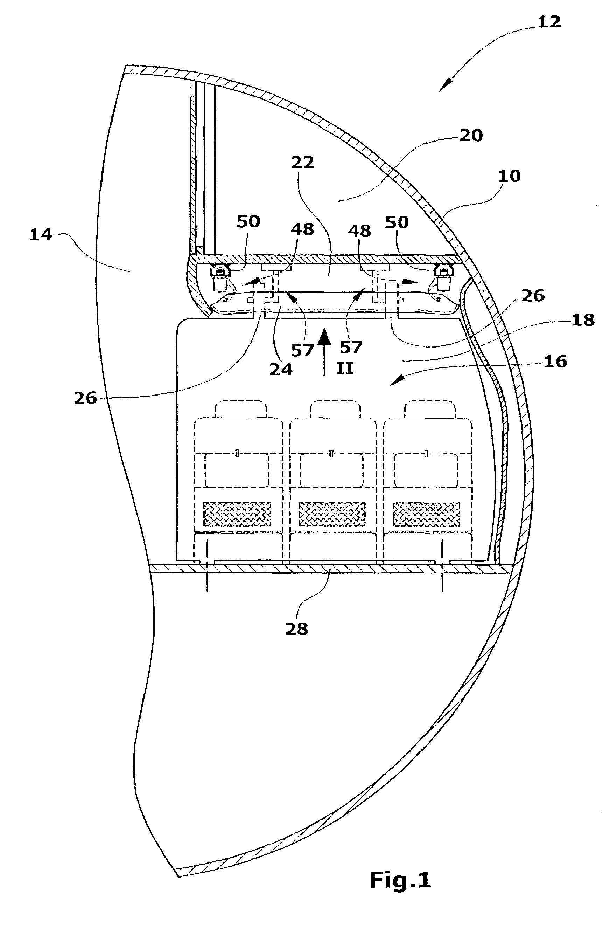

Fig. 1 zeigt einen Teilquerschnitt durch den Rumpf 10 eines Flugzeuges 12, dessen Kabine 14 mehrere Sitzreihen 16 aufweist und durch beispielsweise Trennwände 18 links und rechts des Gangs in einzelne Bereiche unterteilt ist. Oberhalb der Sitzreihen 16 befinden sich Gepäckablagefächer 20 mit einem darunter angeordneten Versorgungskanal 22, der durch Deckenverkleidungselemente 24 oberhalb der Sitzreihen 16 verkleidet ist. Bei dem in Fig. 1 gezeigten Deckenverkleidungselement 24 handelt es sich um ein solches, das Verankerungszapfen 26, die von der auf dem Kabinenboden 28 befestigten Trennwand 18 nach oben hin abstehen, aufnimmt.

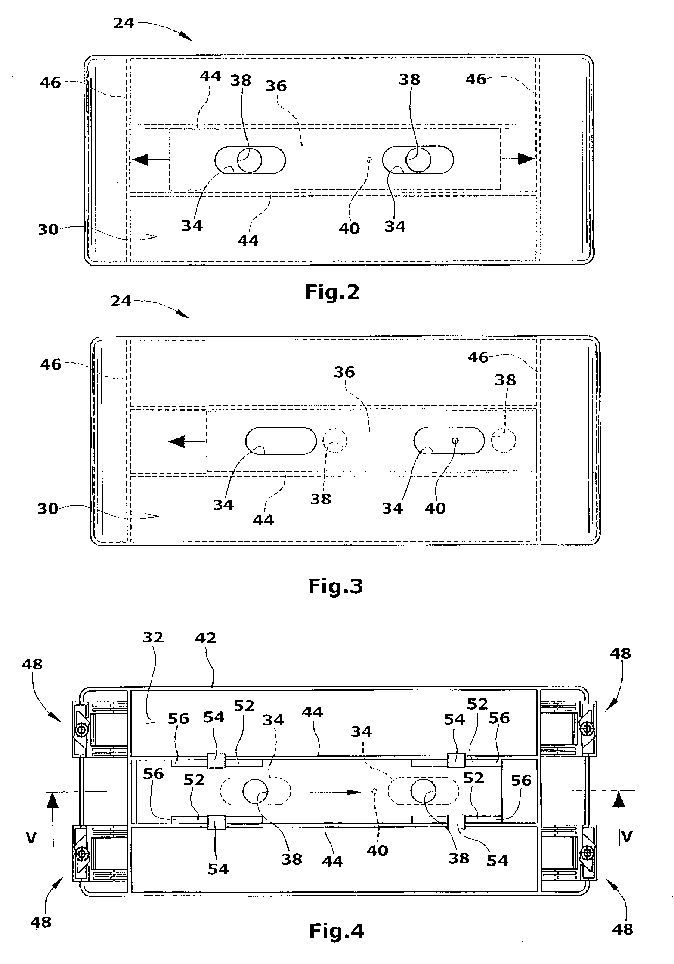

Die Fign. 2 bis 5 zeigen verschiedene Ansichten dieses Deckenverkleidungselements 24, das neben seiner Verkleidungsfunktion auch die Funktion der Halterung für die Trennwand 18 haben kann.

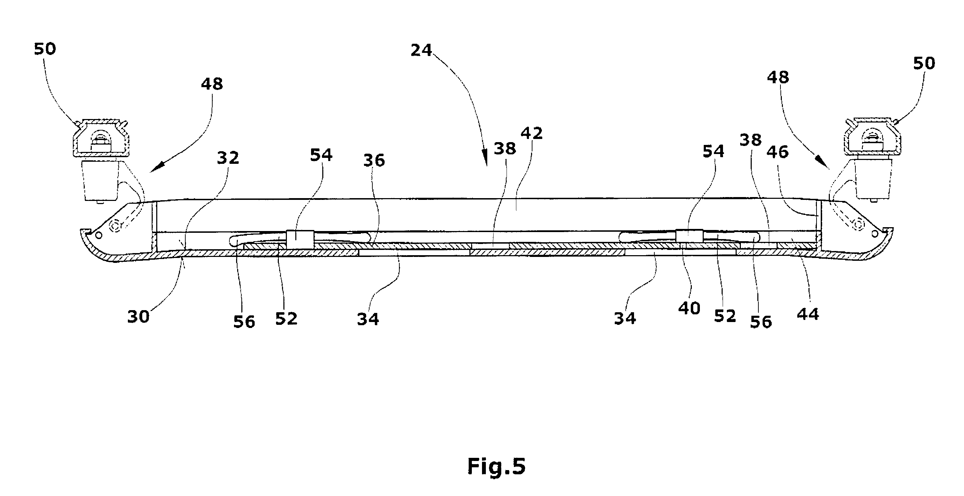

Ansichten auf die den Sitzen zugewandte Vorderseite 30 des Deckenverkleidungselements 24 sowie auf dessen Rückseite 32 sind in den Fign. 2 und 3 bzw. 4 dargestellt. Fig. 5 zeigt einen Schnitt entlang der Linie V-V der Fig. 4.

Um die beiden zur Aufnahme durch das Deckenverkleidungselement 24 vorgesehenen Elemente (Verankerungszapfen 26) der Trennwand 18 aufnehmen zu können, umfasst das Deckenverkleidungselement 24 zwei Aussparungen 34, die durch einen rückseitig des Deckenverkleidungselements 24 gehaltenen Schieber 36 verschließbar sind. Der Schieber selbst weist den Aussparungen 34 zugeordnete Aufnahmeöffnungen 38 auf, die sich bei verschlossenen Aussparungen 34 (Fig. 3) außerhalb dieser Aussparungen 34 befinden (siehe Fig. 3) und die sich in einer Öffnungsposition des Schiebers 36 innerhalb der Aussparungen 34 befinden (siehe Fig. 2). In der Schieberposition gemäß Fig. 2 lassen sich die Verankerungszapfen 26 der Trennwand 18 durch die Aussparungen 34 des Deckenverkleidungselements 24 und die Aufnahmeöffnungen 38 des Schiebers 36 des Deckenverkleidungselements 24 hindurchführen. Durch die Ausführung der Aussparungen 34 als Langloch mit Erstreckung in Schieberbewegungsrichtung (siehe die Pfeile in den Fign. 2 und 3) lässt sich ein Bewegungsausgleich zwischen Trennwand 18 und Deckenverkleidungselement 24 realisieren, wie er beispielsweise bei Erschütterungen des Flugzeuges 12 z. B. während der Start- und Landephase nötig ist.

Wird keine Trennwand 18 benötigt, so lassen sich die Aussparungen 34 durch den Schieber 36 verschließen. In dieser Abdeckposition des Schiebers 36 gemäß Fig. 3 befindet sich in einer der beiden Aussparungen 34 eine kleine Bohrung 40, die durch Einführen eines spitzen Werkzeuges (beispielsweise eines Schraubendrehers) die Betätigung des Schiebers 36 aus der Abdeckposition in die Öffnungsposition ermöglicht.

Die Führung des Schiebers 36 an der Rückseite 32 des Deckenverkleidungselements 24 ist in den Fign. 4 und 5 gezeigt. Danach weist das Deckenverkleidungselement 24 einen umlaufenden und von der Rückseite 32 aufragenden Rand 42 auf, innerhalb dessen im mittleren Bereich zwei parallele Längsversteifungsrippen 44 mit quer zu diesen verlaufenden Querversteifungsrippen 46 von der Rückseite 32 abstehen. Zwischen den beiden Längsversteifungsrippen 44, die beidseitig der Aussparungen 34 angeordnet sind, ist der Schieber 36 geführt. Außerhalb der Querversteifungsrippen 46 befinden sich in diesem Beispiel vier Befestigungselemente 48, die der Befestigung des Deckenverkleidungselements 24 an Halteschienen 50 unterhalb der Gepäckablagefächer 20 dienen. An den Längsversteifungsrippen 44 sind Andrückelemente 52 in Form von federelastischen Stäben angeordnet, die in den Längsrandbereichen des Schiebers 36 an diesem anliegen und den Schieber 36 damit gegen die Rückseite 32 des Deckenverkleidungselements 24 drücken. Die Andrückelemente 52 sind mittels Klammern 54 an den Längsversteifungsrippen 44 befestigt. Zwischen den Andrückelementen 52 und der Rückseite 32 des Deckenverkleidungselements 24 ist der Schieber 36 mit Reibungskraft gehalten, wodurch eine unbeabsichtigte Verschiebung des Schiebers 36 insbesondere aus der Abdeckposition gemäß Fig. 2 verhindert wird. Diese Bewegungsverhinderung wird noch unterstützt, indem in der Abdeckposition (siehe Fig. 5) jeweils eines der verbreiterten Enden 56 zweier Andrückelemente 52 an der Rückseite 32 des Deckenverkleidungselements 24 anliegt und somit einen Widerstand gegen eine Bewegung des Schiebers 36 zwischen diesen verbreiterten Enden 56 und der Rückseite 32 des Deckenverkleidungselements 24 bildet.

Wie man sich anhand der Fign. 2 und 3 vorstellen kann, sind die Aussparungen 34 in dem Deckenverkleidungselement 24 sowohl bei montierter als auch bei nicht vorhandener Trennwand 18 stets verschlossen. Hierdurch entsteht ein ästhetisch ansprechendes Design und insbesondere wird verhindert, dass Fremdkörper in die Aussparungen 34 eingeführt werden.

Bei dem zuvor beschriebenen ersten Ausführungsbeispiel der Erfindung wird davon ausgegangen, dass das Deckenverkleidungselement 24 auch sämtliche auf die Trennwand 18 wirkenden Seitenkräfte aufnehmen kann, um die Trennwand 18 zu fixieren; bei dem Deckenverkleidungselement 24 handelt es sich also um die Halteeinheit im Sinne der Erfindung. Die Deckenverkleidung sollte jedoch leichtgewichtig ausgebildet sein. Damit kommt ihr unter Umständen nicht die erforderliche Stabilität zu, um die Trennwand 18 alleinig zu fixieren. In Fig. 1 sind daher zwei Fixierelemente 57 angedeutet, die sich von dem Boden des Gepäckablagefachs 20 nach unten in den Versorgungskanal 22 hinein erstrecken und durch das Deckenverkleidungselement 24 gegenüber der Kabine 14 abgedeckt sind. Diese Fixierelemente 57 sind stabil genug, um im Zusammenspiel mit den mit ihnen gekoppelten Verankerungszapfen 26 die Trennwand 18 zu halten. Die Halteeinheit umfasst demnach die Fixierelemente 57 bzw. mindestens ein Fixierelement und das Deckenverkleidungselement 24. Zwar kann auch bei dieser Ausgestaltung der Erfindung dem Deckenverkleidungselement 24 noch eine Haltefunktion zukommen; ausreichend ist es aber, wenn das Deckenverkleidungselement 24 hierbei lediglich noch eine Verkleidungsfunktion übernimmt und sich die Verankerungszapfen 26 lediglich noch durch das Deckenverkleidungselement 24 hindurch erstrecken, ohne notwendigerweise an diesem Deckenverkleidungselement 24 gehalten und/oder geführt zu sein.

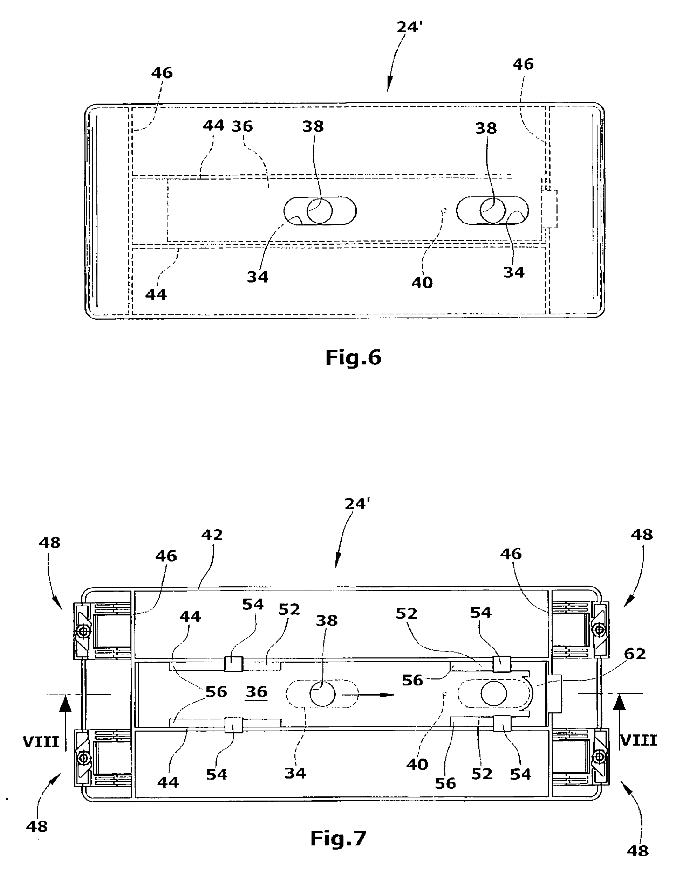

In den Fign. 6 bis 9 ist ein zweites Ausführungsbeispiel eines Deckenverkleidungselements 24' dargestellt, das zur Halterung der Verankerungszapfen 26 der Trennwand 18 dient. Soweit die Einzelbestandteile des Deckenverkleidungselements 24' denen des Deckenverkleidungselements 24 gleichen bzw. identisch sind, sind sie in den Fign. 6 bis 8 mit den gleichen Bezugszeichen versehen.

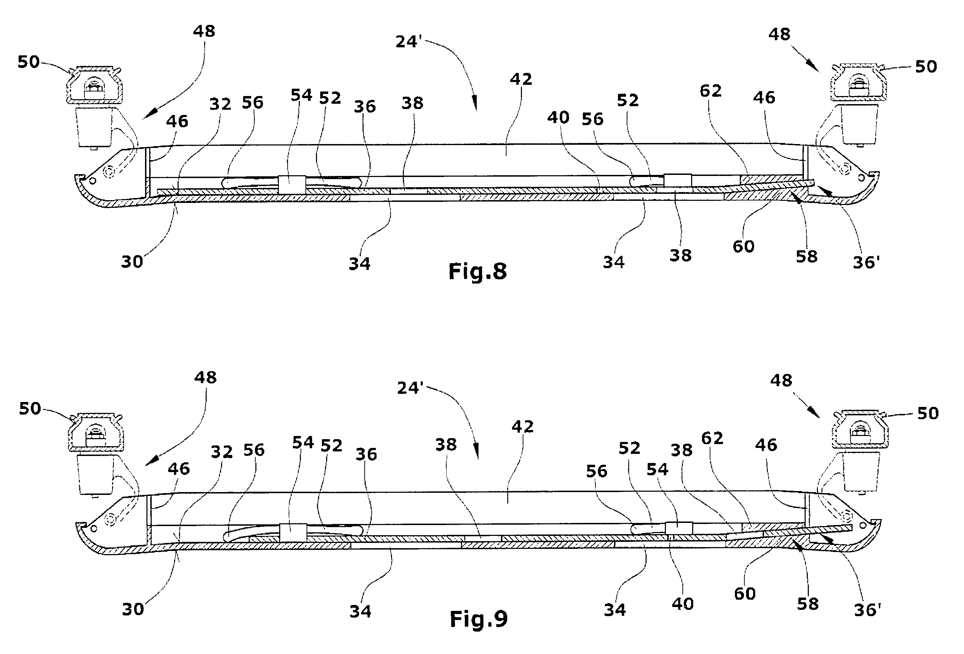

Grundsätzlich ist der Aufbau des Deckenverkleidungselements 24' gleich zu dem des Deckenverkleidungselements 24 der Fign. 1 bis 5. Der Unterschied besteht zum einen darin, dass das Paar von Aussparungen 34 bezogen auf die Darstellung gemäß Fig. 6 weiter nach rechts zur in Fig. 7 ebenfalls rechts dargestellten Querversteifungsrippe 46 angeordnet ist. Derartige Ausgestaltungen des Deckenverkleidungselements 24' können je nach Einbausituation und Platzverhältnissen in der Kabine 14 des Flugzeuges 12 erforderlich sein. Wenn die Konstellation gemäß Fig. 6 gegeben ist, so muss sich der Schieber 36 mit seinem der rechten Querversteifungsrippe 46 zugewandten Ende über die Versteifungsrippe 46 hinweg bewegen, um beispielsweise in die Abdeckposition verschoben zu werden. Hierbei ist es erforderlich, das besagte Ende 36' des Schiebers 36 über ein keilförmiges Element 58 mit einer Führungsfläche 60, auf der der Schieber 36 entlang gleitet, von der Rückwand 32 des Deckenverkleidungselements 24' bis über die Versteifungsrippe 46 anzuheben. Diese Situation ist in Fig. 8 gezeigt. An der der Führungsfläche 60 abgewandten Seite des Schiebers 36 befindet sich ein Gegenelement 62, von dem die als Andrückelemente 52 ausgebildeten Federarme abstehen, an welchen wiederum das Gegenelement 62 an den Längsversteifungsrippen 44 mittels der Klammern 54 befestigt ist. Die Bewegung des Schieberendes 36' zwischen dem keilförmigen Element 58 und dem Gegenelement 62 verursacht eine weitere Reibungskraft, die den Schieber 36 in jeder gewünschten Schieberstellung und insbesondere in der Abdeckposition hält (siehe Fig. 9).

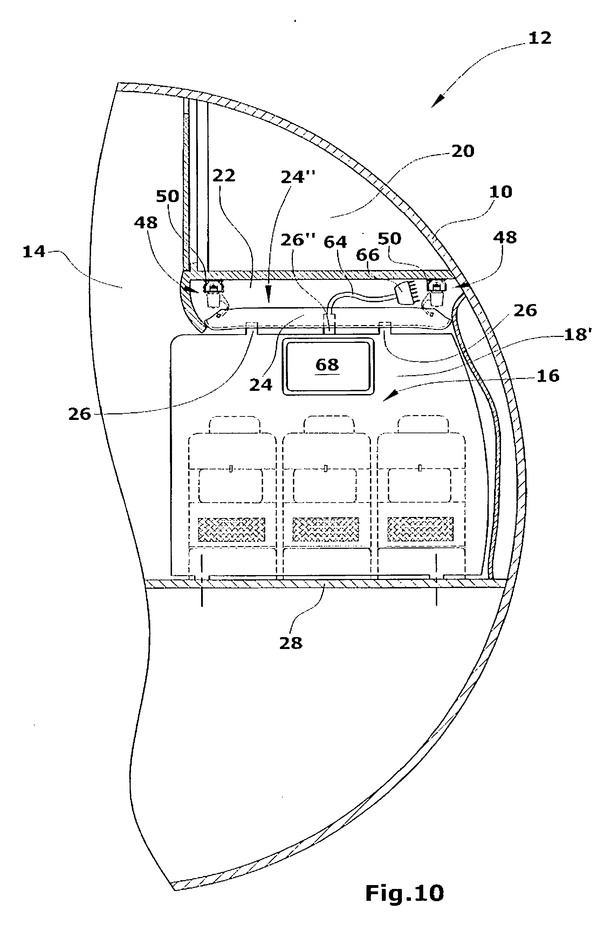

In den Fign. 10 bis 13 ist ein weiteres Ausführungsbeispiel eines Deckenverkleidungselements 24" gezeigt, das wie die Deckenverkleidungselemente 24 und 24' der Halterung der Trennwand 18 oberhalb der Sitzreihen 16 dient. Auch bzgl. der Fign. 10 bis 12 gilt, dass die dort verwendeten Bezugszeichen gleich zu denen der Fign. 1 bis 9 sind, sofern identische bzw. funktionsgleiche Elemente betroffen sind.

Fig. 10 zeigt ähnlich Fig. 1 die Anordnung einer alternativ ausgebildeten Trennwand 18' in der Kabine 14 des Flugzeuges 12. Wie die Trennwand 18 gemäß Fig. 1, so weist auch die Trennwand 18' in dem Ausführungsbeispiel gemäß Fig. 10 zwei Verankerungszapfen 26 auf. Zusätzlich ist am oberen Ende der Trennwand 18' noch ein drittes Verankerungselement 26 angeordnet, das als Kabelführungsrohr für ein Kabel 64 ausgebildet ist, an dem ein Stecker 66 angeordnet ist. Das Kabel 64 dient der Steuerung und Versorgung eines TV-Monitors 68, der an der Trennwand 18' angebracht ist.

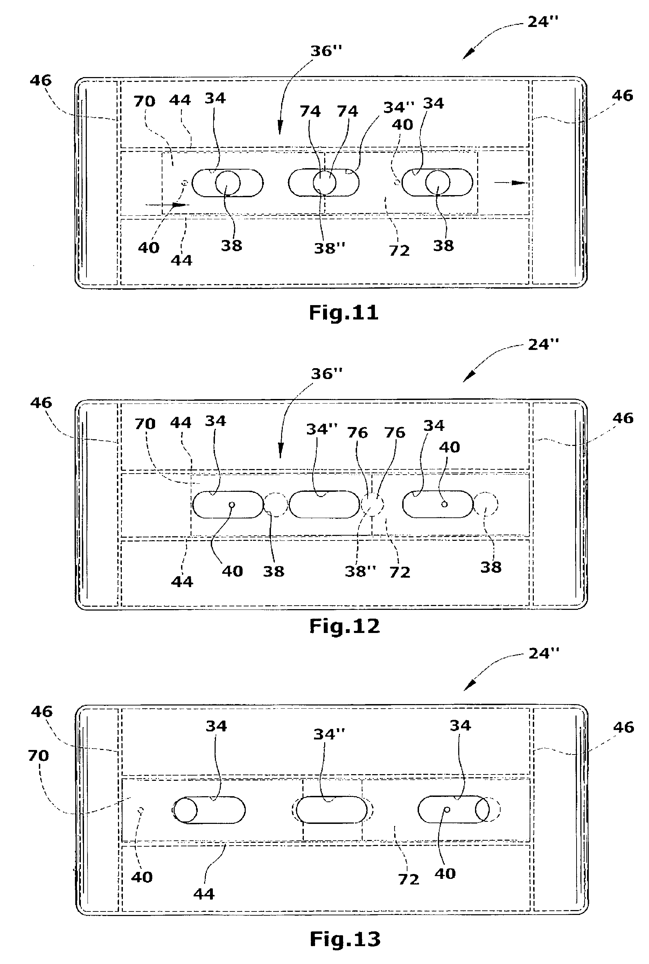

Dementsprechend weist das Deckenverkleidungselement 24" drei Aussparungen 34 auf. Die beiden gemäß Fig. 11 außen gezeichneten Aussparungen sind den Verankerungszapfen 26 der Trennwand 18' zugeordnet, während die in Fig. 11 in der Mitte dargestellte weitere Aussparung 34" dem Verankerungselement 26" zugeordnet ist.

Als weiterer Unterschied zur Ausgestaltung der Deckenverkleidungselemente 24 und 24' weist das Deckenverkleidungselement 24" einen zweigeteilten Schieber 36" auf, der die beiden Schieberabschnitte 70 und 72 umfasst. Beide Schieberabschnitte 70,72 sind unabhängig voneinander verschiebbar und weisen jeweils eine einer Aussparung 34 zugeordnete Aufnahmeöffnung 38 sowie eine Bohrung 40 auf. Die Wirkungsweise der beiden Schieberabschnitte 70,72 ist gleich der Wirkungsweise der Schieber 36 der anderen Ausführungsbeispiele.

Ferner weist der Schieber 36" eine dritte Aufnahmeöffnung 38" auf, die durch Randaussparungen 74 in den einander zugewandten Endbereichen der Schieberabschnitte 70,72 ausgebildet sind. Liegen die Schieberabschnitte 70,72 aneinander, so bilden sie die Aufnahmeöffnung 38", die so dimensioniert ist, dass das weitere Verankerungselement 26" (Kabelführungsrohr) umschließbar ist.

Während in Fig. 11 die Schieberstellung für den Fall gezeigt ist, dass sämtliche Aufnahmeöffnungen 38,38" innerhalb der ihnen jeweils zugeordneten Aussparungen 34,34" angeordnet sind, befindet sich der Schieber 36" in Fig. 12 in seiner Abdeckposition, in der die Schieberabschnitte 70,72 die Aussparungen 34,34" verschließen und die Bohrungen 40 in den außen liegenden Aussparungen 34 liegen.

Die Besonderheit des zweiteiligen Schiebers 36" wird anhand der Fig. 13 deutlich. In Fig. 13 ist die Situation dargestellt, dass sich die beiden Schiebeabschnitte 70,72 in einer solchen Position befinden, dass die gesamte mittlere Aussparung 34" frei liegt. Der Kabelstecker 66 ist so dimensioniert, dass er durch die frei liegende mittlere Aussparung 34" gesteckt werden kann. Nachdem dies erfolgt ist, werden die beiden Schieberabschnitte 70,72 wieder aufeinander zu bewegt, so dass ihre Randaussparungen 74 das zusätzliche Verankerungselement 26" (Kabelführungsrohr) umschließen. Jetzt stellt sich die Situation gemäß Fig. 11 ein, in der dann, wie auch in Fig. 10 gezeigt, die Verankerungselemente 26 in den innerhalb der außen liegenden Aussparungen 34 angeordneten Aufnahmeöffnungen 38 der Schieberabschnitte 70,72 angeordnet sind.

## Patentansprüche

1. Vorrichtung zur Halterung einer Trennwand an einer Wand im Innenraum eines Fahrzeuges, insbesondere an einer Deckenverkleidung einer Flugzeugkabine, mit
- einer am Fahrzeug anbringbaren Halteeinheit (57,24;24';24"), die mindestens eine Aussparung (34;34") aufweist,
- einem an der Halteeinheit (57,24;24';24") angeordneten Schieber (36;36"), in dem eine Aufnahmeöffnung (38;38") zur Aufnahme eines aufzunehmenden Verankerungselements (26;26") der Trennwand (18;18") ausgebildet ist,
- wobei der Schieber (36; 36") auf einer Bewegungsbahn zwischen einer Abdeckposition, in der der Schieber (36;36") die Aussparung (34;34") der Halteeinheit (57,24;24';24") verschließt, und einer Öffnungsposition, in der- die Aufnahmeöffnung (38;38") innerhalb der Aussparung (34; 34") der Halteeinheit (57,24;24';24") angeordnet ist, beweglich an der Halteeinheit (57,24;24';24") gelagert ist.

2. Vorrichtung nach Anspruch 1, **dadurch gekennzeichnet, dass** der Schieber (36;36") ein mit einem Handhabungsorgan betätigbares Betätigungselement zum Bewegen des Schiebers (36;36") aus der Abdeckposition in Richtung auf die Öffnungsposition aufweist und dass das Betätigungselement in der Abdeckposition innerhalb der Aussparung (34;34") der Halteeinheit (57,24;24';24") angeordnet ist.

3. Vorrichtung nach Anspruch 2, **dadurch gekennzeichnet, dass** das Betätigungselement ein Loch (40) oder eine Vertiefung im Schieber (36;36") ist.

4. Vorrichtung nach einem der Ansprüche 1 bis 3, **dadurch gekennzeichnet, dass** der Schieber (36;36") linear bewegbar an der Halteeinheit (57,24;24';24") geführt ist.

5. Vorrichtung nach einem der Ansprüche 1 bis 4, **dadurch gekennzeichnet, dass** die Halteeinheit (57,24;24';24") mindestens zwei zueinander parallele Versteifungsrippen (44) aufweist, an und zwischen denen der Schieber (36;36") bewegbar geführt ist.

6. Vorrichtung nach einem der Ansprüche 1 bis 5, **dadurch gekennzeichnet, dass** der Schieber (36;36") über mindestens ein elastisches Andrückelement (52) an der Halteeinheit (57,24;24';24") anliegend gehalten ist.

7. Vorrichtung nach Anspruch 5 und 6, **dadurch gekennzeichnet, dass** das Andrückelement (52) an einer der Versteifungsrippen (44) anbringbar ist.

8. Vorrichtung nach Anspruch 7, **dadurch gekennzeichnet, dass** das Andrückelement (52) ein elastischer Stab mit einseitigen Verbreiterungen (56) an seinen Enden ist.

9. Vorrichtung nach einem der Ansprüche 6 bis 8, **dadurch gekennzeichnet, dass** das Andrückelement (52) in der Abdeckposition des Schiebers (36;36") unter anderem an dessen stirnseitigen Ende anliegt, und zwar, sofern vorhanden, mit einem seiner verbreiterten Enden (56).

10. Vorrichtung nach einem der Ansprüche 1 bis 9, **dadurch gekennzeichnet, dass** die Halteeinheit (57,24;24';24") an mindestens einem Ende des Bewegungspfades des Schiebers (36;36") einen aufragenden und in den Bewegungspfad hineinragenden Vorsprung aufweist und dass nahe dem Vorsprung eine Führungsfläche zum Leiten des sich innerhalb dieses Endes des Bewegungspfades bewegenden Endabschnitts des Schiebers (36;36") über den Vorsprung angeordnet ist.

11. Vorrichtung nach Anspruch 10, **dadurch gekennzeichnet, dass** der Vorsprung eine Versteifungsrippe (46) ist.

12. Vorrichtung nach einem der Ansprüche 1 bis 11, **dadurch gekennzeichnet, dass** die Halteeinheit (57,24;24';24") als Verkleidungselement insbesondere zur Verkleidung eines Versorgungskanals oberhalb von Fahrgastsitzen des Fahrzeuges ausgebildet ist.

13. Vorrichtung nach einem der Ansprüche 1 bis 12, **gekennzeichnet durch** ein Fixierelement (57), das auf der der Trennwand abgewandten Seite der Halteeinheit (57,24;24';24") am Fahrzeug anbringbar ist und an dem das mindestens eine von der Aufnahmeöffnung (38;38") aufnehmbare und sich **durch** diese hindurch erstreckende aufzunehmende Element (26;26") festlegbar ist.

14. Vorrichtung nach einem der Ansprüche 1 bis 13, **dadurch gekennzeichnet, dass** die Halteeinheit (57,24;24';24") mehrere entlang der Bewegungsbahn des Schiebers (36;36") angeordnete Aussparungen (34;34") aufweist, dass der Schieber (36; 36") mehrere Aufnahmeöffnungen (38;38") zur Aufnahme jeweils eines aufzunehmenden Elements (26;26") der Trennwand (18;18') aufweist und dass in der Abdeckposition des Schiebers (36;36") sämtliche Aussparungen (34;34") der Halteeinheit (57,24;24';24") durch den Schieber (36;36") verschlossen sind und sich in der Öffnungsposition des Schiebers (36;36") in jeder Aussparung (34;34") der Halteeinheit (57,24;24';24") jeweils eine Aufnahmeöffnung (38;38") des Schiebers (36;36") befindet.

15. Vorrichtung nach Anspruch 2 oder 3 und 14, **dadurch gekennzeichnet, dass** der Schieber (36;36") lediglich ein Betätigungselement aufweist.

16. Vorrichtung nach einem der Ansprüche 1. bis 13, **dadurch gekennzeichnet, dass** die Halteeinheit (57,24;24';24") mehrere Aussparungen (34;34") aufweist, dass jeder Aussparung (34;34") ein mit einer Aufnahmeöffnung (38;38") zur Aufnahme eines aufzunehmenden Elements (26;26") versehener Schieber (36;36") zugeordnet ist und dass jeder Schieber (36;36") auf einer Bewegungsbahn zwischen einer Abdeckposition, in der die dem Schieber (36;36") zugeordnete Aussparung (34;34") der Halteeinheit (57,24;24';24") durch den Schieber (36;36") verschlossen ist, und einer Öffnungsposition, in der die Aufnahmeöffnung (38;38") dieses Schiebers (36;36") innerhalb der diesem zugeordneten Aussparung (34;34") der Halteeinheit (57,24;24';24") angeordnet ist, beweglich an der Halteeinheit (57,24;24';24") gelagert ist.

17. Vorrichtung nach Anspruch 2 oder 3 und 16, **dadurch gekennzeichnet, dass** jeder Schieber (36;36") ein Betätigungselement aufweist.

18. Vorrichtung nach Anspruch 16 oder 17, **dadurch gekennzeichnet, dass** die Halteeinheit (57,24") eine weitere Aussparung (34") aufweist, der zwei benachbarte Schieber (70,72) zugeordnet sind, und dass diese benachbarten Schieber (70,72) an ihren aufeinander zu und voneinander weg bewegbaren Enden jeweils eine Randaussparung (76) aufweisen, die bei aneinander liegenden Schiebern (70,72) eine Aufnahmeöffnung (38") für ein aufzunehmendes Element (26") der Trennwand (18') bilden, wobei diese benachbarten Schieber (70,72) in ihren Abdeckpositionen die weitere Aussparung (34") der Halteeinheit (57,24") von einem der Schieber (70,72) verschließen und sich die von den benachbarten Schiebern (70,72) gebildete Aufnahmeöffnung (38") in den Öffnungspositionen der benachbarten Schieber (70,72) innerhalb der weiteren Aussparung (34") der Halteeinheit (57,24") befindet.

19. Vorrichtung nach einem der Ansprüche 1 bis 13, **dadurch gekennzeichnet, dass** der Schieber (36") zweiteilig mit zwei benachbarten, bewegbar an der Halteeinheit (57,24;24';24") gefuhrten Schieberabschnitten (70,72) ausgebildet ist und dass die beiden Schieberabschnitte (70,72) an ihren aufeinander zu und voneinander weg bewegbaren Enden jeweils eine Randaussparung (76) aufweisen, die bei aneinander liegenden Schieberabschnitten (70,72) die Aufnahmeöffnung (38") des Schiebers (36") bilden, wobei diese Schieberabschnitte (70,72) in der Abdeckposition des Schiebers (36") die Aussparung. (34") der Halteeinheit (57,24") verschließen und sich die von den beiden Schieberabschnitten (70,72) gebildete Aufnahmeöffnung (38") in der Öffnungsposition des Schiebers (36") innerhalb der Aussparung (34") der Halteeinheit (57,24") befindet.

20. Vorrichtung nach einem der Ansprüche 1 bis 19, **dadurch gekennzeichnet, dass** die Halteeinheit (57,24;24';24") mindestens ein Fixierelement (57) für das aufzunehmende Veranker-ongselement (26;26") und ein das mindestens eine Fixierelement (57) überdeckendes Verkleidungselement (24;24',24") aufweist, in und an dem die mindestens eine Aussparung (34;34") und der Schieber (36;36") angeordnet sind.

## Claims

1. A device for holding a partition wall on a wall in the interior of a vehicle, particularly on a ceiling paneling of an airplane cabin, comprising
- a holding unit (57,24;24';24") to be attached to the vehicle and having at least one recess (34;34"),
- a slider (36;36") arranged on the holding unit (57,24;24';24") and formed with a receiving opening (38;38") for receiving a paneling element (26;26") of the partition wall (18; 18"),
- the slider (36;36") being supported on the holding unit (57,24;24'; 24") for movement on a moving path between a cover position in which the slider (36;36") closes the recess (34;34") of the holding unit (57,24;24';24"), and an open position in which the receiving opening (38;38") is arranged within the recess (34;34") of the holding unit (57,24;24';24").

2. The device according to claim 1, **characterized in that** the slider (36; 36") comprises an actuating element to be actuated by a handling member for moving the slider (36;36") from the cover position in the direction towards the open position, and that the actuating element in the cover position is arranged within the recess (34;34") of the holding unit (57,24;24';24").

3. The device according to claim 2, **characterized in that** the handling member is a hole (40) or a deepened portion in the slider (36;36").

4. The device according to any one of claims 1 to 3, **characterized in that** the slider (36;36") is guided for linear movement on the holding unit (57,24;24';24").

5. The device according to any one of claims 1 to 4, **characterized in that** the holding unit (57,24;24';24") comprises at least two mutually parallel stiffening ribs (44) having the slider (36;36") movably guided thereon and therebetween.

6. The device according to any one of claims 1 to 5, **characterized in that** the slider (36;36") is held in abutment to the holding unit (57,24;24'; 24") by at least one elastic press-on element (52).

7. The device according to claim 5 and 6, **characterized in that** the press-on element (52) can be attached to one of the stiffening ribs (44).

8. The device according to claim 7, **characterized in that** the press-on element (52) is an elastic rod provided with one-sided widened portions (56) on its ends.

9. The device according to any one of claims 6 to 8, **characterized in that**, in the cover position of the slider (36;36"), the press-on element (52) is in abutment, inter alia, on the end side of the slider, notably by one of the widened ends (56) of the press-on element, if provided.

10. The device according to any one of claims 1 to 9, **characterized in that** the holding unit (57,24;24';24") on at least one end of the moving path of the slider (36;36") comprises an upstanding projection extending into the moving path, and that, near the projection, a guide face is arranged by which the end portion of the slider (36;36") moving within this end of the moving path is guided beyond the projection.

11. The device according to claim 10, **characterized in that** the projection is a stiffening rib (46).

12. The device according to any one of claims 1 to 11, **characterized in that** the holding unit (57,24;24';24") is configured as a paneling element particularly for covering a supply channel above the passenger seats of the vehicle.

13. The device according to any one of claims 1 to 12, **characterized by** a fixing element (57) adapted to be mounted on the vehicle on the side of the holding unit (57,24;24';24") facing away from the partition wall and adapted for fixation thereto of the at least one element (26;26') to be received by the receiving opening (38;38") and extending therethrough.

14. The device according to any one of claims 1 to 13, **characterized in that** the holding unit (57,24;24';24") comprises a plurality of recesses (34;34") arranged along the moving path of the slider (36;36"), that the slider (36;36") comprises a plurality of receiving openings (38;38") for receiving respectively one element (26;26') of the partition wall (18;18') and that, in the cover position of the slider (36;36"), all recesses (34;34") of the holding unit (57,24;24';24") are closed by the slider (36;36") and, in the open position of the slider (36;36"), each recess (34;34") of the holding unit (57,24;24';24") has arranged therein respectively one receiving opening (38;38") of the slider (36;36").

15. The device according to claims 2 or 3 and 14, **characterized in that** the slider (36;36") comprises only one actuating element.

16. The device according to any one of claims 1 to 13, **characterized in that** the holding unit (57,24;24';24") comprises a plurality of recesses (34;34"), that each recess (34;34") has assigned thereto a slider (36;36") provided with a receiving opening (38;38") for receiving an element (26;26") and that each slider (36;36") is supported on the holding unit (57,24;24';24") for movement on a moving path between a cover position in which the recess (34;34") of the holding unit (57,24;24';24") assigned to the slider (36;36") is closed by the slider (36;36"), and an open position in which the receiving opening (38;38") of this slider (36;36") is arranged within the recess (34;34") of the holding unit (57,24;24';24") assigned to this slider (36;36").

17. The device according to claim 2 or 3 and 16, **characterized in that** each slider (36;36") comprises an actuating element.

18. The device according to claim 16 or 17, **characterized in that** the holding unit (57,24") comprises a further recess (34") having two adjacent sliders (70,72) assigned thereto, and that these adjacent sliders (70,72), on their ends which are movable towards and away from each other, comprise a respective edge recess (76) which in case of mutual abutment of the sliders (70,72) forms a receiving opening (38") for an element (26") of the partition wall (18'), wherein these adjacent sliders (70,72) in their cover positions close the further recess (34") of the holding unit (57,24") of one of the sliders (70,72) and, in the open positions of the adjacent sliders (70,72), the receiving opening (38") formed by the adjacent sliders (70,72) is arranged within the further recess (34") of the holding unit (57,24").

19. The device according to any one of claims 1 to 13, **characterized in that** the slider (36") is of a two-part configuration comprising two mutually adjacent slider portions (70,72) arranged for movement on the holding unit, and that the two slider portions (70,72), on their ends which are movable towards and away from each other, comprise a respective edge recess (76) which in case of mutual abutment of the slider portions (70,72) form the receiving opening (38") of the slider (36"), wherein these slider portions (70,72) in the cover position of the slider (36") close the recess (34") of the holding unit (57,24") and, in the open position of the slider (36"), the receiving opening (38") formed by the two slider portions (70,72) is arranged within the recess (34") of the holding unit (26").

20. The device according to any one of claims 1 to 19, **characterized in that** the holding unit (57,24;24';24") comprises at least one fixing element (57) for the anchoring element (26,26"), and a paneling element (24;24',24") covering the at least one fixing element (57) and having the at least one recess (34;34") and the slider (36;36") arranged therein and thereon.

## Revendications

1. Dispositif pour le montage d'une cloison sur une paroi à l'intérieur d'un véhicule, en particulier sur un habillage du plafond d'une cabine d'avion, comportant :
- un ensemble de retenue (57, 24 ; 24' ; 24") apte à être fixé sur le véhicule et qui présente au moins un évidement (34 ; 34"),
- un verrou coulissant (36 ; 36") disposé sur l'ensemble de retenue (57, 24 ; 24' ; 24"), dans lequel est réalisée une ouverture de réception (38; 38") destinée à recevoir un élément d'ancrage (26 ; 26") de la cloison (18;18"),
- le verrou coulissant (36; 36") étant disposé en étant mobile sur l'ensemble de retenue (57, 24; 24' ; 24") sur une trajectoire de déplacement entre une position de recouvrement dans laquelle le verrou coulissant (36; 36") ferme l'évidement (34 ; 34") de l'ensemble de retenue (57, 24 ; 24' ; 24"), et une position d'ouverture dans laquelle l'ouverture de réception (38 ; 38") est disposée à l'intérieur de l'évidement (34 ; 34") de l'ensemble de retenue (57, 24 ; 24' ; 24").

2. Dispositif selon la revendication 1, **caractérisé en ce que** le verrou coulissant (36 ; 36") présente un élément d'actionnement manoeuvrable au moyen d'un organe de maniement pour déplacer le verrou coulissant (36 ; 36") de la position de recouvrement vers la position d'ouverture et **en ce que** l'élément d'actionnement est disposé, dans la position de recouvrement, à l'intérieur de l'évidement (34 ; 34") de l'ensemble de retenue (57, 24 ; 24' ; 24").

3. Dispositif selon la revendication 2, **caractérisé en ce que** l'élément d'actionnement est un trou (40) ou une cavité ménagé(e) dans le verrou coulissant (36 ; 36").

4. Dispositif selon l'une des revendications 1 à 3, **caractérisé en ce que** le verrou coulissant (36 ; 36") est guidé en déplacement linéaire sur l'ensemble de retenue (57, 24 ; 24' ; 24").

5. Dispositif selon l'une des revendications 1 à 4, **caractérisé en ce que** l'ensemble de retenue (57, 24 ; 24' ; 24") présente au moins deux nervures de renforcement (44) parallèles entre elles, sur et entre lesquelles le verrou coulissant (36 ; 36") est guidé en déplacement.

6. Dispositif selon l'une des revendications 1 à 5, **caractérisé en ce que** le verrou coulissant (36 ; 36") est maintenu appliqué sur l'ensemble de retenue (57, 24 ; 24' ; 24"), par l'intermédiaire d'au moins un élément de pression élastique (52).

7. Dispositif selon les revendications 5 et 6, **caractérisé en ce que** l'élément de pression (52) peut être fixé sur l'une des nervures de renforcement (44).

8. Dispositif selon la revendication 7, **caractérisé en ce que** l'élément de pression (52) est une barrette élastique munie, à ses extrémités, d'élargissements (56) sur un côté.

9. Dispositif selon l'une des revendications 6 à 8, **caractérisé en ce que** l'élément de pression (52) est en contact, dans la position de recouvrement du verrou coulissant (36 ; 36"), entre autres, avec l'extrémité frontale de celui-ci, et ce, par l'une de ses extrémités élargies (56), si celle-ci existe.

10. Dispositif selon l'une des revendications 1 à 9, **caractérisé en ce que** l'ensemble de retenue (57, 24 ; 24' ; 24") présente, à au moins une extrémité de la trajectoire de déplacement du verrou coulissant (36 ; 36"), une partie en saillie se redressant et pénétrant dans la trajectoire de déplacement, et **en ce qu'**à proximité de la partie en saillie est disposée une surface de guidage pour guider, par dessus la partie en saillie, la section terminale du verrou coulissant (36 ; 36") se déplaçant à l'intérieur de cette extrémité de la trajectoire de déplacement.

11. Dispositif selon la revendication 10, **caractérisé en ce que** la partie en saillie est une nervure de renforcement (46).

12. Dispositif selon l'une des revendications 1 à 11, **caractérisé en ce que** l'ensemble de retenue (57, 24 ; 24' ; 24") est réalisé en tant qu'élément d'habillage, en particulier pour l'habillage d'un canal d'alimentation au-dessus de sièges de passagers du véhicule.

13. Dispositif selon l'une des revendications 1 à 12, **caractérisé par** un élément de fixation (57) capable d'être monté sur le véhicule du côté de l'ensemble de retenue (57, 24 ; 24' ; 24") opposé à la cloison et sur lequel peut être fixé le au moins un élément de réception (26, 26") apte à être logé dans l'ouverture de réception (38 ; 38") et s'étendant à travers celle-ci.

14. Dispositif selon l'une des revendications 1 à 13, **caractérisé en ce que** l'ensemble de retenue (57, 24 ; 24' ; 24") présente plusieurs évidements (34 ; 34") disposés le long de la trajectoire de déplacement du verrou coulissant (36 ; 36"), **en ce que** le verrou coulissant (36; 36") présente plusieurs ouvertures de réception (38 ; 38") pour loger respectivement un élément de réception (26 ; 26") de la cloison (18 ; 18") et **en ce que**, dans la position de recouvrement du verrou coulissant (36 ; 36"), tous les évidements (34 ; 34") de l'ensemble de retenue (57, 24 ; 24' ; 24") sont fermés par le verrou coulissant (36 ; 36") et, dans la position d'ouverture du verrou coulissant (36 ; 36"), se trouve, respectivement, dans chaque évidement (34 ; 34") de l'ensemble de retenue (57, 24 ; 24' ; 24"), une ouverture de réception (38 ; 38") du verrou coulissant (36 ; 36").

15. Dispositif selon les revendications 2 ou 3 et 14, **caractérisé en ce que** le verrou coulissant (36 ; 36") ne présente qu'un élément d'actionnement.

16. Dispositif selon l'une des revendications 1 à 13, **caractérisé en ce que** l'ensemble de retenue (57, 24 ; 24' ; 24") présente plusieurs évidements (34 ; 34"), **en ce qu'**à chaque évidement (34 ; 34") est associé un verrou coulissant (36 ; 36") muni d'une ouverture de réception (38 ; 38") pour recevoir un élément de réception (26 ; 26") et **en ce que** chaque verrou coulissant (36 ; 36") est mobile sur l'ensemble de retenue (57, 24 ; 24' ; 24") sur une trajectoire de déplacement entre une position de recouvrement dans laquelle l'évidement (34 ; 34"), associé au verrou coulissant (36 ; 36"), de l'ensemble de retenue (57, 24 ; 24' ; 24") est fermé par le verrou coulissant (36 ; 36"), et une position d'ouverture dans laquelle l'ouverture de réception (38 ; 38") de ce verrou coulissant (36 ; 36") est disposée à l'intérieur de l'évidement (34 ; 34"), associé à celui-ci, de l'ensemble de retenue (57, 24 ; 24' ; 24").

17. Dispositif selon les revendications 2 ou 3 et 16, **caractérisé en ce que** chaque verrou coulissant (36 ; 36") présente un élément d'actionnement.

18. Dispositif selon la revendication 16 ou 17, **caractérisé en ce que** l'ensemble de retenue (57, 24") présente un autre évidement (34") auquel sont associés deux verrous coulissants adjacents (70, 72) et **en ce que** ces verrous coulissants adjacents (70, 72) présentent chacun, à leurs extrémités pouvant être rapprochées ou éloignées l'une de l'autre, un évidement marginal (76) qui, lorsque les verrous coulissants (70, 72) sont appliqués l'un contre l'autre, forme une ouverture de réception (38") d'un élément de réception (26") de la cloison (18'), ces verrous coulissants (70, 72) adjacents, dans leurs positions de recouvrement, fermant l'autre évidement (34") de l'ensemble de retenue (57, 24") de l'un des verrous coulissants (70, 72) et l'ouverture de réception (38") formée par les verrous coulissants (70, 72) adjacents se trouvant, dans les positions d'ouverture des verrous coulissants (70, 72) adjacents, à l'intérieur de l'autre évidement (34") de l'ensemble de retenue (57, 24").

19. Dispositif selon l'une des revendications 1 à 13, **caractérisé en ce que** le verrou coulissant (36") est réalisé en deux parties avec deux sections de verrou coulissant (70, 72) adjacentes, guidées en déplacement sur l'ensemble de retenue (57, 24 ; 24' ; 24"), et **en ce que** les deux sections de verrou coulissant (70, 72) présentent chacune, à leurs extrémités pouvant être rapprochées ou éloignées l'une de l'autre, un évidement marginal (76) qui, lorsque les verrous coulissants (70, 72) sont appliqués l'un contre l'autre, forme l'ouverture de réception (38") du verrou coulissant (36"), ces sections (70, 72) de verrou coulissant fermant, dans la position de recouvrement du verrou coulissant (36"), l'évidement (34") de l'ensemble de retenue (57, 24"), et l'ouverture de réception (38") formée par les deux sections (70, 72) de verrou coulissant se trouvant, dans la position d'ouverture du verrou coulissant (36'), à l'intérieur de l'évidement (34") de l'ensemble de retenue (57, 24").

20. Dispositif selon l'une des revendications 1 à 19, **caractérisé en ce que** l'ensemble de retenue (57, 24 ; 24' ; 24") présente au moins un élément de fixation (57) de l'élément d'ancrage (26 ; 26") à recevoir et un élément d'habillage (24 ; 24', 24") recouvrant le au moins un élément de fixation (57) dans et sur lequel sont disposés le au moins un évidement (34; 34") et le verrou coulissant (36 ; 36").
